# EUROPÄISCHE PATENTSCHRIFT

(11) **EP 1 353 159 B1**
(45) Veröffentlichungstag und Bekanntmachung des Hinweises auf die Patenterteilung: **15.02.2006**
(21) Anmeldenummer: 03008566.6
(22) Anmeldetag: 14.04.2003
(51) Int. Cl.: G01L 3/14, G01L 5/16, B62D 5/04

(54) **Drehmomentsensor in Form eines monolithischen Aufnahmeteils**
Monolithic torque sensor
Capteur de couple monolithique

(30) Priorität: 12.04.2002 DE 10217015; 12.04.2002 DE 10217016; 03.02.2003 DE 10304359
(43) Veröffentlichungstag der Anmeldung: 15.10.2003
(60) Teilanmeldung: 04019235.3
(73) Patentinhaber: Deutsches Zentrum für Luft- und Raumfahrt e.V., 51147 Köln (DE)
(72) Erfinder: Sporer, Norbert, Dipl.-Ing., 82407 Wielenbach (DE); Hähnle, Matthias, Dipl.-Ing., 80636 München (DE)
(74) Vertreter: von Kirschbaum, Albrecht

(56) Entgegenhaltungen:
- EP-A- 0 575 634
- DE-A- 4 208 522
- DE-A- 19 525 231
- SU-A- 505 912
- US-A- 4 281 538
- US-A- 5 010 970
- US-A- 5 503 241
- US-A- 5 672 834
- US-B1- 6 230 555
- PATENT ABSTRACTS OF JAPAN Bd. 2000, Nr. 05, 14. September 2000 (2000-09-14) & JP 2000 055752 A (KAYABA IND CO LTD), 25. Februar 2000 (2000-02-25)

## Beschreibung

Die Erfindung betrifft Drehmomentsensoren in Form eines monolithischen scheibenförmigen Aufnahmeteils, bestehend aus einem kreisringförmigen Innenflansch mit ersten Krafteinleitungsstellen, aus einem kreisringförmigen Außenflansch mit zweiten Krafteinleitungsstellen und aus zwischen den beiden Flanschen ausgebildeten, radial verlaufenden Verbindungsstegen jeweils mit mechanisch geschwächtem Abschnitt, an welchem druck- oder dehnungsempfindliche, elektrische Ausgangssignale generierende Messwertaufnehmer vorgesehen sind, die nach dem Prinzip einer Wheatstone-Brücke jeweils zu Viertel-, Halb-oder Voll-Brücken in der Weise geschaltet sind, dass ein Drehmoment ermittelbar ist.

Aus DE 101 14 688 C1 ist ein Torsionsmodul für eine Drehmomenterfassungseinrichtung eines Lenksystems eines Kraftfahrzeugs beschrieben, welches ein an einem Lenkrad befestigtes Speichenrad mit einer Nabe und mit einem über Biegespeichen mit der Narbe verbundenen und konzentrisch zu der Narbe angeordneten Kranz aufweist. Hierbei ist an zumindest einer Biegespeiche ein druck- oder dehnungsempfindlicher, elektrische Ausgangssignale generierender Messwertaufnehmer an einem solchen Bereich einer Biegespeiche angeordnet, welcher bei einem Drehwinkelversatz zwischen dem Kranz und der Nabe einer Biegung unterworfen ist.

In DE 196 50 477 C1 ist eine Messeinrichtung zum Messen des Bremsmoments bei einem mit Schreibenbremsen ausgestatteten Kraftfahrzeug beschrieben. Diese Messeinrichtung weist eine mit einer Radfelge verbundene Messnabe auf, die in radialer Richtung gesehen in einen inneren achsennahen Bauteilabschnitt und einen äußeren, den Randbereich der Messnabe bildenden und den inneren Bauteileabschnitt konzentrisch umgebenden Bauteilabschnitt geteilt ist. Beide Abschnitte sind durch radial verlaufende Stege miteinander verbunden, auf denen Sensoren platziert sind, mittels derer die durch die Einleitung eines Drehmoments auf die Stege wirkende Biegespannung messbar ist. Um die auf die Scheibenbremse wirkenden Bremsmomente frei von anderen auf das Kraftfahrzeugrad wirkenden Momente ermitteln zu können, umgibt eine Bremsscheibe einer Bremseinrichtung des Kraftfahrzeugs den äußeren Bauteilabschnitt der Messnabe konzentrisch und ist allein an diesem befestigt.

Ferner ist in DE 42 08 522 C2 ein Drehmomentsensor beschrieben, welcher eine in Bezug auf die Drehmomentachse radial innen liegende Innennabe und einen dazu konzentrischen radial außenliegenden Außenring aufweist, die durch mehrere radial verlaufende Stege miteinander verbunden sind. Hierbei weisen die Stege ein I-Profil auf, das durch Stegabschnitte bewirkt ist, die vorder- und rückseitige Ausnehmungen auf den Stirnseiten der Stege in axialer Richtung aufweisen. Hierbei sind auf den parallel zu den Stirnseiten liegenden Flächen der Stege in diesen Ausnehmungen Scherkraft-Meßaufnehmer angeordnet. Hierbei handelt es sich jedoch um verhältnismäßig kleine ovale Ausnehmungen, die zur Nabe weitergeführt sind und zum Aufbringen von Dehnungsmessstreifen nur eine kleine schwer zugängliche Applikationsfläche aufweisen.

In US 6,230,555 weist eine Vorrichtung zum Messen des Bremsmomentes eines Motorfahrzeugs mit Scheibenbremsen eine Messnabe auf, die auf einer Radachse befestigt und mit einer Radfelge verbunden ist. In radialer Richtung gesehen, ist die Nabe in einen inneren Teil nahe bei der Achse und einen äußeren Teil aufgeteilt, welcher den Randbereich der Messnabe bildet und den inneren Teil konzentrisch umgibt. Diese beiden Abschnitte sind miteinander durch Rippen verbunden, welche sich in radialer Richtung erstrecken und auf welchen Sensoren angebracht sind, um die Biegebeanspruchung zu messen, welche auf die Rippen auf Grund des Aufbringens eines Drehmoments wirkt.

Aufgabe der Erfindung ist es, Drehmomentsensoren so auszubilden, dass sehr genau Messwerte gemessen, dadurch sehr genau Drehmomente ermittelt und unmittelbar in beispielsweise für eine Drehmomentregelung geeignete Signale umgesetzt werden können.

Gemäß der Erfindung ist diese Aufgabe durch Drehmomentsensoren mit den Merkmalen der Ansprüche 1 und 8 gelöst. Vorteilhafte Weiterbildungen sind Gegenstand von Unteransprüchen.

Bei einer ersten Ausführungsform der Erfindung weist bei einem Drehmomentsensor in Form eines monolithischen scheibenförmigen Aufnahmeteils mit den Merkmalen des Oberbegriffs des Anspruchs 1, das Aufnahmeteil eine zusammenhängende, gegliederte, plane Oberfläche auf, während die mechanisch geschwächten Abschnitte von Verbindungsstegen als unterseitige Ausnehmungen mit jeweils einem dünnen membranartigen Abschluss ausgebildet sind. Hierbei sind auf der planen flächigen Oberseite der membranartigen Abschlüsse Messwertaufnehmer aufgebracht.

Durch den membranartigen Abschluss ist somit eine Fläche mit gleichmäßiger Spannungsverteilung geschaffen. Ferner brauchen die Messwertaufnehmer bei der erfindungsgemäßen Ausführungsform eines Drehmomentsensors nicht so exakt platziert zu werden, wie bei den bekannten Drehmomentsensor-Aüsführungen. Obendrein müssen auch keine speziellen Scherkraftaufnehmer verwendet werden. Die gemäß der Erfindung als Messwertaufnehmer verwendeten Dehnungsmeßstreifen können somit auf der planen Oberseite der Ausnehmung nicht nur in einfacher Weise platziert, sondern auch effektiv durch Anpressen aufgebracht werden.

Gemäß der Erfindung haben die mechanisch geschwächten Abschnitte der Verbindungsstege einen im wesentlichen u-förmigen Querschnitt. Ferner ist der übergang von der flächigen Unterseite des membranartigen Abschlusses jeder Ausnehmung in die zur flächigen Unterseite etwa senkrecht ausgerichteten Wandungsbereiche als eine umlaufende Rundung bzw. Auskehlung ausgebildet. Durch eine derartige umlaufende Rundung ergibt sich eine geringe Materialbelastung und gleichzeitig ein gleichmäßiger Spannungsverlauf. Beide Maßnahmen sind äußerst vorteilhaft im Hinblick auf die Lebensdauer eines derart ausgeführten Drehmomentsensors.

Darüber hinaus weisen die etwa in radialer Richtung verlaufenden, stegförmigen, seitlichen Wandungsbereiche der Verbindungsstege unterschiedliche Wandstärken und somit elastische und weniger elastische, steifere Bereiche auf.

Gemäß einer bevorzugten Ausführungsform der Erfindung befinden sich die Wandungsbereichen mit geringer Wandstärke entsprechenden, elastischen Bereiche in den Übergängen von den in radialer Richtung verlaufenden Abschnitten zu entlang der Flansche verlaufenden Abschnitten der Wandungsbereiche und dazwischen liegen die Wandungsbereichen mit größerer Wandstärke entsprechenden weniger elastischen und somit steiferen Bereiche.

Aufgrund dieser Ausgestaltung der unterseitigen Ausnehmung ist der membranartige Abschluss bei einer Drehmomentbelastung nachgiebig, hingegen bei einer Axial- und Kippbelastung steif. Hohe Spannungen bzw. Dehnungen treten somit bei dem membranartigen Abschluss gemäß der Erfindung ausschließlich bei den zu messenden Drehmomenten auf.

Obwohl zum Ermitteln eines Drehmoments, beispielsweise an der Abtriebswelle eines Motors in Form eines Servomotors ein Drehmomentsensor mit nur einem radial verlaufenden Verbindungssteg zwischen den Flanschen mit einem mechanisch geschwächten Abschnitt durchaus ausreicht, hat es sich generell als zweckmäßig erwiesen, einen symmetrischen Aufbau zu wählen, da bei einem solchen Aufbau Störeinflüsse, wie Querkräfte und/oder Biegemomente, einfacher zu eliminieren sind. Obendrein ist eine gegebenenfalls vorteilhafte Redundanz vorhanden. Ferner kann bei einem Drehmomentsensor in Form eines scheibenförmigen Teils mit zwei, drei oder vier Verbindungsstegen die Anordnung von Messaufnehmern in Form von Dehnungsmessstreifen so gewählt werden, dass durch in axialer Richtung wirkende Kräfte kein Drehmomentsignal erzeugt wird.

Bei einer zweiten bevorzugten Ausführungsform der Erfindung weisen bei dem Drehmomentsensor in Form eines monolithischen scheibenförmigen Aufnahmeteils nach dem Oberbegriff des Anspruchs 8 die etwa radial ausgerichteten seitlichen Wandungsbereiche der Ausschnitte einen veränderlichen Querschnitt auf. Die in radialer Richtung verlaufenden Außenflächen der Verbindungsstege sind etwa planparallele Flächen. Hierdurch sind zwei Meßspeichen gebildet, auf welchen entsprechend ausgerichtete Dehnungsmeßstreifen aufgebracht sind. Bei der Applikation der Dehnungsmeßstreifen können beispielsweise einfache Schraubzwingen zum Aufbringen des erforderlichen Anpressdrucks verwendet werden.

Der nicht konstante Wandungsquerschnitt der Verbindungsstege bewirkt eine günstigere Biegung und führt zu einer vorteilhafteren Biegelinie, so dass auch aus diesem Grund die Dehnungsmeßstreifen nicht mehr so exakt wie bisher platziert werden müssen; die Dehnungsmeßstreifen können daher, wie schon bezüglich der ersten Ausführungsform dargelegt, kostengünstiger aufgebracht werden. Da eine gravierende Fehlplatzierung kaum möglich ist, ist insgesamt die Funktionszuverlässigkeit größer.

Da bei Vorsehen eines Ausschnitts in jedem Verbindungssteg zwei Meßspeichen ausgebildet sind, ergeben sich bei vier Verbindungsstegen insgesamt acht Meßspeichen vom Innen- zum Außenflansch. Somit sind bei dieser Ausführungsform nicht nur acht Meßspeichen in Form der Verbindungsstege geschaffen, sondern gleichzeitig können die Ausschnitte zwischen jeweils zwei Verbindungsstegen entsprechend groß bemessen werden, so dass in ihnen vom Außenflansch nach innen vorstehende Ansätze zum Anbringen von Elektronik tragenden Teilen ausgebildet werden.

Gemäß der Erfindung kann das Aufnahmeteil zusätzlich eine der Anzahl Verbindungsstege entsprechende Anzahl Anschläge in Form von jeweils vom Innen- oder Außenflansch ausgehend bis in Einschnitte im Außen- oder Innenflansch reichende, radial verlaufende Balken aufweisen. Ferner ist zwischen den freien Enden der Balken und den Einschnitten im Innen- oder Außenflansch ein schmaler Spalt ausgebildet.

Auf senkrecht zur Balkenoberseite verlaufenden planen Außenflächenbereichen der Balken sind jeweils entsprechend ausgerichtete Messwertaufnehmer aufgebracht. Die Balken, die bei einer hohen Belastung anliegen, d.h. im Drehmomentfluss liegen, und den Sensor versteifen, dienen somit als überlastschutz für die einzelnen Messspeichen. Da diese Anschlagbalken, mit Dehnungsmeßstreifen beklebt, wie die übrigen Meßspeichen auch als Meßspeichen dienen, kann somit der Anschlag detektiert werden und im hohen Drehmomentbereich kann mit den Anschlagbalken bei versteiftem Sensor genau gemessen werden.

Gemäß der Erfindung können die Anschläge auch als Paßstifte ausgebildet sein, die zwischen den Verbindungsstegen in am Innenflansch ausgebildeten Ansätzen eingesetzt sind und mit einer gewissen Spielpassung in im Außenflansch ausgebildete Bohrungen vorstehen. Hierbei hat die Verwendung von Paßstiften den Vorteil, dass sie aus einem anderen Material als der Sensor sein können und üblicherweise aus gehärtetem Stahl sind. Da der Drehmomentsensor oftmals aus einer relativ nachgiebigen Aluminiumlegierung hergestellt ist, wird durch Verwenden von Paßstiften aus einem härterem Material in Verbindung mit einem Drehmomentsensor erreicht, dass dieser im Messbereich nachgiebig und beispielsweise im Fall eines Anschlags sehr steif ist.

Ferner ergibt sich durch das Einsetzen von Paßstiften die aus einem erheblich härterem Material bestehen als beispielsweise der monolithische Sensor der Vorteil, dass die Paßstifte auch in axialer Richtung anschlagen, weil sie in Bohrungen sitzen und somit zwischen den Paßstiften und dem monolithischen Körper des Drehmomentsensors ein kreisförmiger Spalt vorhanden ist.

Durch solche Endanschläge ist ein erfindungsgemäßer Drehmomentsensor vor mechanischen Beschädigungen in Form von plastischen Verformungen geschützt, zu denen es beispielsweise kommen könnte, wenn der Drehmomentsensor in dem Gelenk eines Roboterarmes untergebracht ist und es zu einer Kollision des Roboterarms mit der Umgebung kommt.

In vorteilhafter Weise können Drehmomentsensoren gemäß der Erfindung beispielsweise zum Messen von Drehmomenten in Robotergelenken oder auch in rotatorischen Antrieben eingesetzt und so integriert werden, dass mittels der Drehmomentsensoren gemessene Drehmomente unmittelbar in für eine Drehmomentregelung geeignete Signale umgesetzt werden.

Nachfolgend wird die Erfindung anhand der Zeichnungen im einzelnen erläutert. Es zeigen:
- Fig.1a und 1b: in perspektivischer Darstellung eine erste Ausführungsform eines Drehmomentsensors mit vier Verbindungsstegen, und zwar in Fig.1a dessen Vorderseite und in Fig.1b dessen Rückseite;
- Fig.2: eine stark vergrößerte Wiedergabe einer in einem Verbindungssteg vorgesehenen Ausnehmung;
- Fig.3: in perspektivischer Darstellung eine Schnittansicht entlang des Verbindungsstegs einer Linie III-III in Fig.2;
- Fig.4a und 4b: eine zweite Ausführungsform eines Drehmomentsensors mit vier Verbindungsstegen, und zwar in Fig. 4a eine Draufsicht auf dessen Vorderseite und in Fig.4b eine der Fig.1b entsprechende perspektivische Darstellung dessen Rückseite;
- Fig.5a: eine vergrößerte Darstellung eines in einem Verbindungssteg ausgebildeten Ausschnitts;
- Fig.5b: in stark vergrößerter Darstellung eine Variante eines Ausschnitts in einem Verbindungssteg;
- Fig.6a und 6b: eine durch Endanschläge erweiterte, modifizierte Ausführungsform eines Drehmomentsensors der Fig.4a und 4b, und zwar in Fig.6a in Draufsicht und in Fig.6b in perspektivischer Darstellung, und
- Fig.7a und 7b: eine weitere Variante eines Drehmomentsensors mit Endanschlägen, und zwar in Fig.7a in Draufsicht und in Fig.7b in perspektivischer Darstellung;

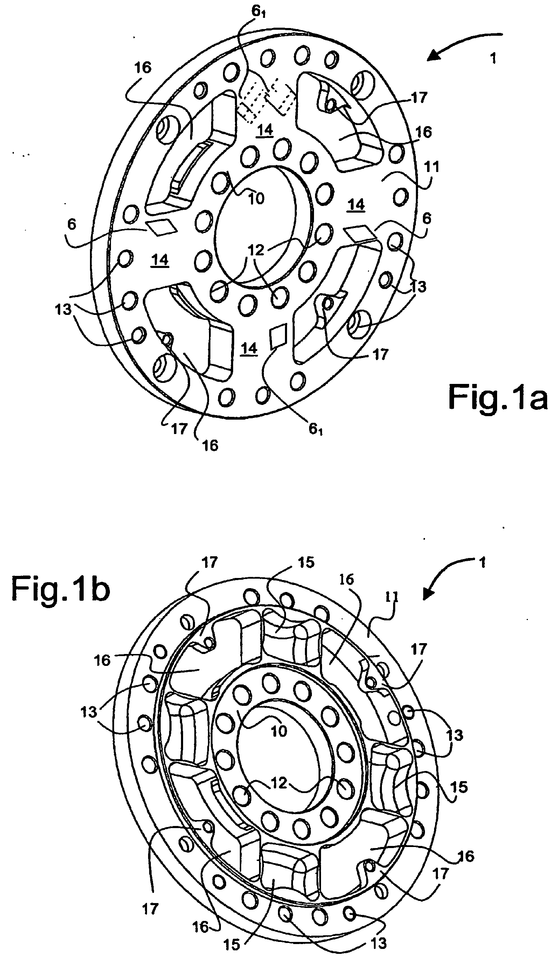

In Fig.1a und 1b sind jeweils in perspektivischer Darstellung Vorderseite und Rückseite einer ersten Ausführungsform eines Drehmomentsensors dargestellt, welcher als ein monolithisches, scheibenförmiges Aufnahmeteil 1 ausgebildet ist, dessen Oberseite eine in zusammenhängende Abschnitte unterteilte, plane Fläche ist.

Das Aufnahmeteil 1 besteht aus einem Innenflansch 10 mit einer Anzahl ersten Krafteinleitungsstellen 12, einem Außenflansch 11 mit einer im allgemeinen größeren Anzahl von zweiten Krafteinleitungsstellen 13 und aus vier zwischen den beiden Flanschen 10 und 11 ausgebildeten, radial verlaufenden Verbindungsstegen 14 mit mechanisch geschwächten Abschnitten in Form von unterseitigen Ausnehmungen 15.

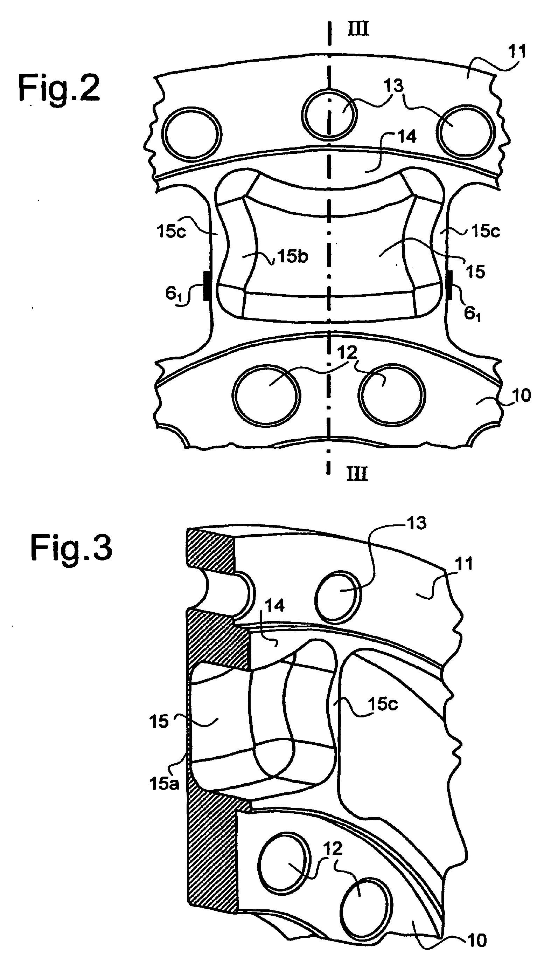

Die unterseitigen Ausnehmungen 15 sind jeweils, wie der perspektivischen Darstellung der Rückseite in Fig.1b bzw. der Schnittansicht in Fig.3 sowie der Darstellung in Fig.2 zu entnehmen ist, dahingehend optimiert, dass sie vorzugsweise nierenförmig ausgebildet sind und durch einen dünnen membranartigen Abschluss 15a (Fig.3) bezüglich der Oberseite abgeschlossen sind. Hierbei ist die Oberseite des membranartigen Abschlusses 15a (Fig.3) und damit der Ausnehmung eine plane Fläche, auf der Messwertaufnehmer, beispielsweise Dehnungsmeßstreifen 6₁ (Fig.1a)aufgebracht sind.

Wie der Schnittansicht in Fig.3 zu entnehmen ist, haben die jeweils durch eine Ausnehmung 15 geschwächten Abschnitte der Verbindungsstege 14 einen im wesentlichen u-förmigen Querschnitt. Ferner ist der Übergang von der flächigen Unterseite des membranartigen Abschlusses 15a der jeweiligen Ausnehmung 15 in zur Ausnehmungsunterseite etwa senkrecht verlaufende Wandungsbereiche 15c als eine umlaufende Rundung bzw. Auskehlung 15b ausgebildet. Hierdurch ergibt sich eine geringere Materialbelastung in diesem Bereich und obendrein ein gleichmäßiger Spannungsverlauf, was sich wiederum in sehr vorteilhafter Weise auf die Lebensdauer eines Drehmomentsensors auswirkt.

Wie ebenfalls insbesondere den vergrößerten Darstellungen der Fig.2 und 3 zu entnehmen ist, weisen die etwa in radialer Richtung verlaufenden Wandungsbereiche 15c der einzelnen Verbindungsstege 14 unterschiedliche Wandstärken und somit elastische und weniger elastische, steifere Bereiche auf.

Hierbei befinden sich in Fig.2 und 3 die Wandbereichen mit geringer Wandstärke entsprechenden elastischen Bereiche in den Übergängen von den in radialer Richtung verlaufenden Abschnitten zu entlang des Innenflansches 10 und des Außenflansches 11 verlaufenden Abschnitten der Wandungsbereiche 15, während sich etwa im mittleren Teil der Wandungsbereiche 15c und damit zwischen den elastischen Bereichen Abschnitte mit einer größeren Wandstärke und somit die steiferen Bereiche befinden.

Der membranartige Abschluß 15a ist somit von Stegen (Wandungsbereichen) mit unterschiedlichen Wandstärken und dadurch mit elastischen und weniger elastischen Bereichen umgeben, weshalb vorstehend auch von einer nierenförmigen Ausnehmung gesprochen ist. Bezüglich des membranartigen Abschlusses 15a hat dies darüber hinaus zur Folge, dass dieser bei einer Drehmomentbelastung nachgiebig ist, während er bei einer Axial- oder Kippbelastung aufgrund eines Kippmoments steif ist. Ferner treten hohe Spannungen bzw. Dehnungen in dem membranartigen Abschluss 15a somit ausschließlich nur bei den zu messenden Drehmomenten auf.

Wie der Darstellung in Fig.1a zu entnehmen ist, können für den Fall, dass das monolithische Aufnahmeteil 1 eines Drehmomentsensors nur einen Verbindungssteg 14 hat, auf dem einzigen Verbindungssteg zwei unter 45° ausgerichtete, gestrichelt dargestellte Dehnungsmessstreifen 6₁ aufgebracht werden.

Um jedoch die Auswertung der Messergebnisse zu verbessern und zu erleichtern, sind Dehnungsmessstreifen 6₁ spiegelbildlich auf jeweils zwei diagonal einander gegenüberliegenden Verbindungsstegen 14 ebenfalls wieder unter 45° zu einer fiktiven, radial verlaufenden Mittenlinie des jeweiligen Verbindungsstegs 14 aufgebracht.

Wie insbesondere der vergrößerten Darstellung in Fig.2 zu entnehmen ist, sind die senkrecht zur Oberfläche des Aufnahmeteils 1 ausgerichteten, etwa in radialer Richtung verlaufenden Außenflächen der Wandungsbereiche 15c der Verbindungsstege als plane Flächen ausgebildet. Damit sind auf den beiden planen Außenflächen jedes der Verbindungsstege 14 etwa planparallele Applikationsflächen zum Aufbringen von weiteren Dehnungsmeßstreifen geschaffen. Somit sind in jedem Verbindungssteg 14 zwei Meßspeichen mit veränderlichem Querschnitt mit jeweils einer planen äußeren Applikationsfläche zum Aufbringen von Dehnungsmeßstreifen ausgebildet.

In der in Fig.1 dargestellten Ausführungsform sind an zwischen benachbarten Verbindungsstegen 14 vorgesehenen Ausschnitten 16 Ansätze 17 ausgebildet, welche etwa in der Mitte des jeweiligen Ausschnitts 16 von der Innenseite des Außenflansches 11 nach innen vorstehen. Auf derartigen Ansätzen 17 kann elektronische Hardware, beispielsweise in Form eines A-nalogverstärkers zum Verstärken der ermittelten Messwerte und ein dem Verstärker nachgeordneter Analog-Digital-Wandler sowie die eigentliche Auswerteelektronik unmittelbar auf/an dem monolithischen Aufnahmeteil 1 des Drehmomentsensors angebracht werden.

Dadurch sind zum einen die eingangs erwähnten Signalstörungen minimiert bzw. weitgehend ausgeschaltet und zum anderen wird bei dieser Ausbildung eines Drehmomentsensors für die zur Auswertung benötigte Hardware kein zusätzlicher Bauraum benötigt.

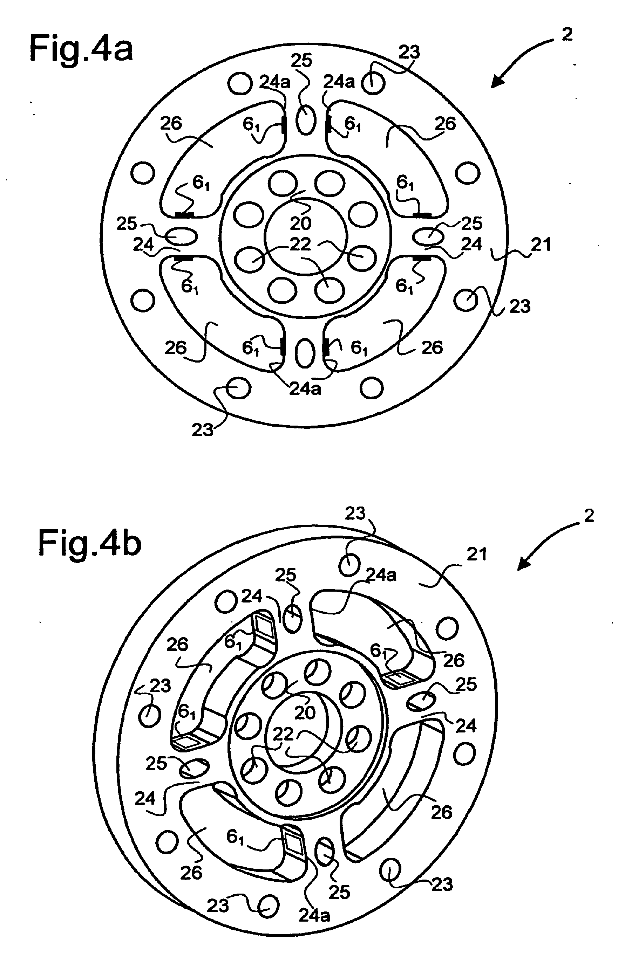

Auch bei der zweiten in Fig.4a, 4b dargestellten Ausführungsform ist der Drehmomentsensor wieder als ein monolithisches scheibenförmiges Aufnahmeteil 2 mit planer Oberseite ausgebildet. Ferner besteht das Aufnahmeteil 2 wiederum aus einem kreisringförmigen Innenflansch 20 mit ersten Krafteinleitungsstellen 22, aus einem kreisringförmigen Außenflansch 21 mit zweiten Krafteinleitungsstellen 23 und aus vier zwischen den beiden Flanschen ausgebildeten, radialverlaufenden Verbindungsstegen 24.

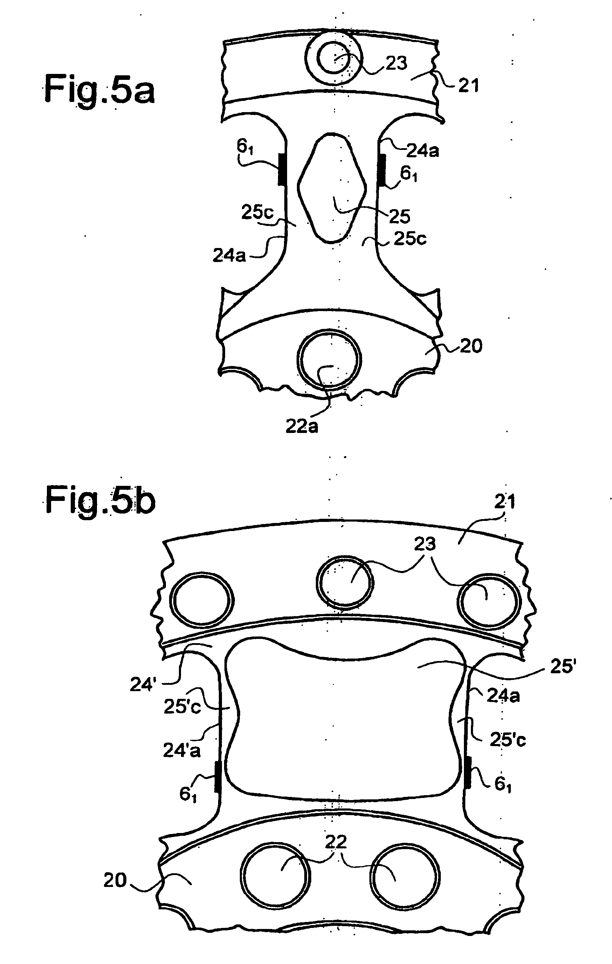

Bei der zweiten Ausführungsform sind jedoch im Unterschied zur ersten Ausführungsform in den vier Verbindungsstegen 24 die mechanisch geschwächten Abschnitte als von der Ober- zur Unterseite der Verbindungsstege 24 durchgehende Ausschnitte 25 ausgebildet. Diese Ausschnitte können, wie in Fig.4a und 4b dargestellt, die Form einer Ellipse und in Fig.5a die Form einer Raute haben oder sind, wie in Fig.5b dargestellt, nierenförmig ausgebildet.

Wie den Fig.4a bis 5b zu entnehmen ist, sind die senkrecht zur Oberfläche des Aufnahmeteils 2 ausgerichteten, in radialer Richtung verlaufenden Außenflächen 24a (Fig.5a) und 24'a (Fig.5b) der jeweiligen Verbindungsstege 24 bzw. 24' als plane Flächen ausgebildet, auf welchen entsprechend ausgerichtete Messwertaufnehmer 6₁ aufgebracht sind. Wie bereits in Verbindung mit Fig.2 und 3 ausgeführt, haben die etwa radial ausgerichteten Wandungsbereiche 25c bzw. 25'c der jeweiligen Ausschnitte 25 und 25' der Verbindungsstege 24 bzw. 24' einen veränderlichen Querschnitt, wobei sich wiederum elastische und weniger elastische und damit steifere Bereiche abwechseln.

Hierbei befinden sich bei den Ausschnitten 25 in Fig.4a, 4b und Fig.5a die elastischen Bereiche etwa im mittleren Bereich der in zwei Messspeichen aufgeteilten Verbindungsstege 24 bzw. 24a, während sich die weniger elastischen und damit steiferen Bereiche in den Übergängen von den Verbindungsstegen 24 bzw. 24' zu dem Innenflansch 20 bzw. dem Außenflansch 21 befinden.

Die Ausführung in Fig.5b entspricht bezüglich der unterschiedlichen Wandstärken und damit der elastischen und weniger elastischen Bereiche der vorstehend ausführlich beschriebenen Ausführungsform in Fig.2. Der einzige Unterschied besteht darin, dass es sich in Fig.5b um einen von der Oberzur Unterseite des Aufnahmeteils durchgehenden Ausschnitt 25' handelt, während in Fig.2 eine Ausnehmung 15 mit einem dünnen membranartigen Abschluss 15a vorgesehen ist.

Gemeinsam ist den Ausführungsformen in Fig.4a bis 5b, dass die Applikationsflächen in sich plan und jeweils an den Außenseiten der Verbindungsstege 24, 24' zwei als planparallele Flächen zum Aufbringen von Dehnungsmeßstreifen 6₁ ausgebildet sind. In allen drei Ausführungsformen ist der unter den Applikationsflächen befindliche belastbare Querschnitt der beiden Meßspeichen jedes Verbindungsstegs 24 bzw. 24' veränderlich.

Aufgrund des nicht konstanten Querschnitts der beiden in jedem Verbindungssteg ausgebildeten Meßspeichen ergibt sich bei einer Belastung eine günstigere Biegung bzw. eine vorteilhafte Biegelinie, so dass auch in diesem Fall die Platzierung der Dehnungsmeßstreifen nicht mehr ganz so exakt wie bei den bisher bekannt gewordenen Ausführungsformen vorgenommen sein muss, und damit das Aufbringen der Dehnungsmeßstreifen schneller und damit kostengünstiger erfolgen kann. Ferner ist eine Fehlplatzierung kaum möglich, so dass auch dadurch eine höhere Zuverlässigkeit hinsichtlich der Funktionsweise gegeben ist. Da es sich bei den beiden Außenflächen der in jedem Verbindungssteg 24, 24' ausgebildeten beiden Meßspeichen jeweils um eine plane Applikationsfläche handelt und obendrein die beiden Applikationsflächen im wesentlichen planparallel verlaufen, können bei der Applikation der Dehnungsmeßstreifen, um den erforderlichen Anpressdruck aufzubringen, beispielsweise einfache Schraubzwingen zum Einsatz kommen.

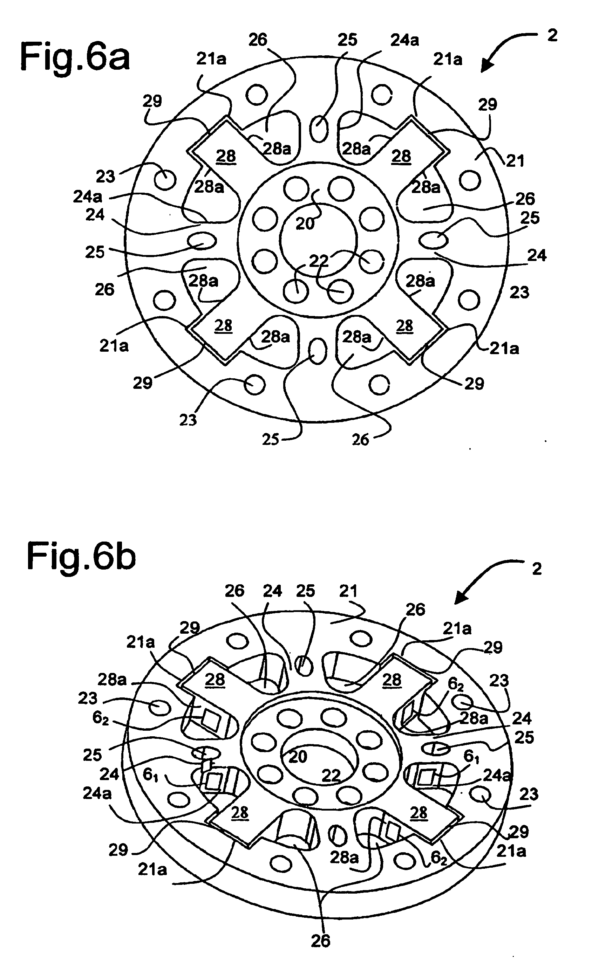

Die Ausführungsform in Fig.6a und 6b unterscheidet sich von derjenigen in Fig.4a und 4b dadurch, dass in Fig.6a und 6b zusätzlich vier Anschläge 28 in Form von radial verlaufenden Balken integriert sind, welche in Fig.6a und 6b vom Innenflansch 20 ausgehen und bis in beispielsweise u-förmig ausgebildete Einschnitte 21a im Außenflansch 21 reichen. Die vier Einschnitte können jedoch auch von dem Außenflansch 21 ausgehen und bis in Einschnitte im Innenflansch 20 reichen. Hierbei ist zwischen den freien Enden der Balken 28 und den Einschnitten 21a im Innen- oder Außenflansch ein schmaler Spalt 29 in Form beispielsweise eines erodierten Schlitzes ausgebildet.

Bei der Ausführungsform in Fig.6b sind Dehnungsmessstreifen 6₁ wiederum auf den radial und senkrecht zur Oberfläche des Aufnahmeteils 2 ausgerichteten planen Außenflächenbereichen 24a der Verbindungsstege 24 entsprechend ausgerichtet aufgebracht.

Zusätzlich können weitere entsprechend ausgerichtete Dehnungsmessstreifen 6₂ auf radial und senkrecht zur Balkenoberseite ausgerichteten planen Außenflächenbereichen 28a der Balken 28 aufgebracht sein. Durch die seitlich auf den radial verlaufenden Balken 28 aufgebrachten Dehnungsmessstreifen 6₂ ist ein zweiter Messbereich geschaffen, welcher dann zur Wirkung kommt, wenn bei einem hohen Drehmoment die Balken 28 als mechanische Anschläge fungieren und an den Seitenflanken der Einschnitte 21a anliegen.

Somit können durch die Anschläge bleibende Verformungen sowie gleichzeitig übermäßige Dehnungen im Drehmomentsensor vermieden werden. Auf diese Weise ist bei hoher Belastung durch das Anliegen der Balken 28 an einer der Seiten/Flanken der Einschnitte 21 insgesamt eine Versteifung des Drehmomentsensors erreicht.

Die Balken, die bei hoher Last anliegen, d.h. im Drehmomentfluss liegen und den Sensor versteifen, dienen als Überlastschutz für die eigentlichen Meßspeichen. Wenn auf den planen Außenflächen 28a der Balken 28 Dehnungsmeßstreifen 6₂ aufgebracht sind, sind auch die Balken Meßspeichen wie die übrigen Meßspeichen. Hierdurch kann dann der Anschlag detektiert werden und im hohen Drehmomentbereich kann mit den Anschlagbalken bei versteiftem Drehmomentsensor genau gemessen werden. Ein aus den Dehnungen bzw. Stauchungen der aufgebrachten Dehnungsmeßstreifen erhaltenes Signal für den niedrigen Lastbereich ist im hohen Lastbereich ungenau, weil die Dehnungsmeßstreifen hierfür nicht genau abgestimmt werden können. Ohne die als Endanschläge wirkenden Balken könnte es beispielsweise bei einer Kollision eines Roboterarms mit der Umgebung zu einer dauerhaften plastischen Verformung des Drehmomentsensors kommen.

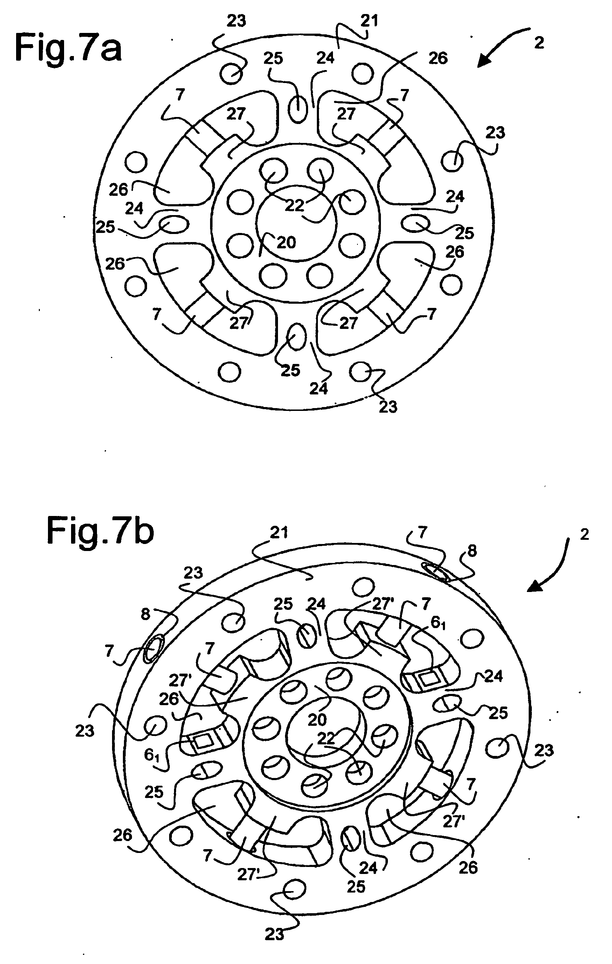

In Fig.7a und 7b ist eine Variante der Ausführungsform in Fig.6a und 6b gezeigt. Der einzige Unterschied besteht darin, dass als Endanschläge statt der Balken 28 Passstifte 7 vorgesehen sind, welche in vom Innenflansch 20 oder auch vom Außenflansch 21 in radialer Richtung vorstehende Ansätze 27 eingesetzt sind und mit einer Spielpassung in Bohrungen 18 vorstehen, welche im Außenflansch 21 bzw. im Innenflansch 20 ausgebildet sind, wobei die erstgenannte Möglichkeit der perspektivischen Darstellung in Fig.7b zu entnehmen ist.

Derartige Paßstifte können aus einem anderen Material als der monolithische Drehmomentsensor bestehen. üblicherweise bestehen Paßstifte aus gehärtetem Stahl. Der monolithische Drehmomentsensor wird oftmals aus einer relativ nachgiebigen Aluminiumlegierung hergestellt. Durch die Kombination von Paßstiften aus beispielsweise gehärtetem Stahl und einem monolithischen Drehmomentsensor aus einer nachgiebigen Aluminiumlegierung ergibt sich der Vorteil, dass der Drehmomentsensor im Messbereich nachgiebig ist und im Falle eines Anschlags sehr steif ist. Obendrein haben, wie eingangs bereits ausgeführt, Paßstifte den Vorteil, dass sie in Bohrungen sitzen und damit in axialer Richtung anschlagen.

In Abwandlung der anhand von Fig.7a und 7b beschriebenen Ausführungsvariante können jedoch auch vom Innen- und vom Außenflansch in radialer Richtung vorstehende, sich teilweise überdeckende Ansätze ausgebildet sein. Hierbei sind in einem der Ansätze sich in axialer Richtung erstreckende Paßstifte eingesetzt, die mit einer Spielpassung in Bohrungen in den jeweils anderen Ansatz vorstehen.

### Bezugszeichenliste

- 1: Aufnahmeteil
- 10: Innenflansch
- 11: Außenflansch
- 12: Krafteinleitungsstellen von 10
- 13: Krafteinleitungsstellen von 11
- 14: Verbindungsstege
- 14a: Außenflächenbereiche in 14
- 15: Ausnehmungen
- 15a: membranartiger Abschluß von 15
- 15b: umlaufende Rundung
- 15c: Wandungsbereiche
- 16: Ausschnitte
- 17: Ansätze
- 2: Aufnahmeteil
- 20: Innenflansch
- 21: Außenflansch
- 21a: Einschnitt
- 22: Krafteinleitungsstellen 20
- 23: Krafteinleitungsstellen 21
- 24, 24': Verbindungsstege
- 24a, 24'a: Außenflächenbereiche von 24, 24'
- 25, 25': Ausschnitt in 24, 24'
- 25, 25c: Wandungsbereiche
- 26: Ausschnitte zwischen 24, 24'
- 27': Ansätze
- 28: Balken
- 28a: Außenflächenbereiche auf 28
- 29: Spalt
- 6, 6₁, 6₂, 6₃: Dehnungsmeßstreifen
- 7: Passstifte
- 8: Bohrungen

## Patentansprüche

1. Drehmomentsensor in Form eines monolithischen scheibenförmigen Aufnahmeteils (1), bestehend aus einem kreisringförmigen Innenflansch (10) mit ersten Krafteinleitungsstellen (12), aus einem kreisringförmigen Außenflansch (11) mit zweiten Krafteinleitungsstellen (13) und aus zwischen den beiden Flanschen (10, 11) ausgebildeten, radial verlaufenden Verbindungsstegen (14) jeweils mit mechanisch geschwächtem Abschnitt, an welchem druck- oder dehnungsempfindliche, elektrische Ausgangssignale generierende Messwertaufnehmer (6) vorgesehen sind, die nach dem Prinzip einer Wheatstone-Brücke jeweils zu Viertel-, Halb- oder Voll-Brücken in der Weise geschaltet sind, dass ein Drehmoment ermittelbar ist, **dadurch gekennzeichnet, dass** das Aufnahmeteil (1) eine zusammenhängende, gegliederte, plane Oberseite aufweist, und die mechanisch geschwächten Abschnitte der Verbindungsstege (14) als unterseitige Ausnehmungen (15) mit jeweils einem dünnen membranartigen Abschluss (15a) ausgebildet sind, wobei auf der planen flächigen Oberseite der membranartigen Abschlüsse (15a) Messwertaufnehmer (6) aufgebracht sind.

2. Drehmomentsensor nach Anspruch 1, **dadurch gekennzeichnet, dass** die mechanisch geschwächten Abschnitte der Verbindungsstege (14) einen im wesentlichen u-förmigen Querschnitt haben.

3. Drehmomentsensor nach Ansprüche 1 oder 2, **dadurch gekennzeichnet, dass** der Übergang von der flächigen Unterseite des membranartigen Abschlusses (15a) jeder Ausnehmung (15) in zur flächigen Unterseite etwa senkrecht ausgerichtete Wandungsbereiche (15c) als eine umlaufende Rundung (Auskehlung) (15b) ausgebildet ist.

4. Drehmomentsensor nach Anspruch 3, **dadurch gekennzeichnet, dass** die etwa in radialer Richtung verlaufenden, stegförmigen, seitlichen Wandungsbereiche (15c) der Verbindungsstege (14) unterschiedliche Wandungsstärken und somit elastische und weniger elastische, steifere Bereiche aufweisen.

5. Drehmomentsensor nach Anspruch 4, **dadurch gekennzeichnet, dass** sich die Wandungsbereichen mit geringer Wandstärke entsprechenden, elastischen Bereiche in den Übergängen von den in radialer Richtung verlaufenden Abschnitten zu entlang den Flanschen (10, 11) verlaufenden Abschnitten der Wandungsbereiche (15c) befinden und dazwischen die Wandungsbereichen mit größerer Wandstärke entsprechenden, weniger elastischen und somit steiferen Bereiche liegen.

6. Drehmomentsensor nach einem der vorhergehenden Ansprüche, **dadurch gekennzeichnet, dass** die senkrecht zur Oberfläche der Aufnahmeteils (1) ausgerichteten, in radialer Richtung verlaufenden Außenflächen der Verbindungsstege (14) als plane Flächen ausgebildet sind, auf welche Messwertgeber (6₁) aufgebracht sind.

7. Drehmomentsensor nach einem der vorhergehenden Ansprüche, **dadurch gekennzeichnet, dass** in Ausschnitten (16) zwischen zwei Verbindungsstegen (14) vom Außenflansch (11) nach innen vorstehende Ansätze (17a) zum Anbringen von Elektronik tragenden Teilen ausgebildet sind.

8. Drehmomentsensor in Form eines monolithischen scheibenförmigen Aufnahmeteils (2), bestehend aus einem kreisringförmigen Innenflansch (20) mit ersten Krafteinleitungsstellen (22), aus einem kreisringförmigen Außenflansch (21) mit zweiten Krafteinleitungsstellen (23) und aus zwischen den beiden Flanschen (20, 21) ausgebildeten, radial verlaufenden Verbindungsstegen (24) jeweils mit mechanisch geschwächten Abschnitten, die als von der Ober- zur Unterseite der Verbindungsstege (24, 24') durchgehende Ausschnitte (25, 25') ausgebildet sind, wobei mindestens eine der senkrecht zur Oberfläche des Aufnahmeteils (2) ausgerichteten, in radialer Richtung verlaufenden Außenflächen (24a, 24a') der Verbindungsstege (24, 24') als plane Fläche ausgebildet ist, auf welcher druck- oder dehnungsempfindliche, elektrische Ausgangssignale generierende Messwertaufnehmer (6₁) vorgesehen sind, die nach dem Prinzip einer Wheatstone-Brücke jeweils zu Viertel-, Halb- oder Voll-Brücken in der Weise geschaltet sind, dass ein Drehmoment ermittelbar ist, wobei, etwa radial ausgerichtete seitliche Wandungsbereiche (25c, 25'c) der Ausschnitte (25, 25') einen veränderlichen Querschnitt und die in radialer Richtung verlaufenden beiden Außenflächen (24a, 24'a) der Verbindungsstege (24, 24') etwa planparallele Flächen aufweisen, wodurch zwei Messspeichen gebildet sind, auf welche entsprechend ausgerichtete Messwertaufnehmer (6₁) aufgebracht sind.

9. Drehmomentsensor nach Anspruch 8, wobei das Aufnahmeteil (2) zusätzlich eine der Anzahl Verbindungsstege (24) entsprechende Anzahl Anschläge in Form von jeweils vom Innen- oder Außenflansch (20, 21) ausgehend bis in Einschnitte (21a) im Außen- oder Innenflansch (21, 20) reichende, radial verlaufende Balken (28) aufweist, wobei zwischen den freien Enden der Balken (28) und den Einschnitten im Innen- oder Außenflansch (21, 20) ein schmaler Spalt (29) ausgebildet ist, und
dass auf senkrecht zur Balkenoberseite verlaufenden planen Außenflächenbereichen (28a) der Balken (28) jeweils entsprechend ausgerichtete Meßwertaufnehmer (6₂) aufgebracht sind.

10. Drehmomentsensor nach Anspruch 9, wobei zwischen den Verbindungsstegen (24) in am Innen- oder Außenflansch (20, 21) ausgebildeten Ansätzen (27) radialverlaufende Passstifte (7) eingesetzt sind, die mit Spielpassung in Bohrungen (8) im Außen- oder Innenflansch (21, 20) vorstehen.

11. Drehmomentsensor nach Anspruch 9, wobei zwischen den Verbind-ungsstegen (24) vom Innen- oder Außenflansch, (20, 21) in radialer Richtung vorstehende, sich teilweise überdeckende Ansätze ausgebildet sind und jeweils in einem der sich teilweise überdeckenden Ansätze sich in axialer Richtung erstreckende Passstifte eingesetzt sind, die mit Spielpassung in Bohrungen in den jeweils anderen Ansatz vorstehen.

12. Drehmomentsensor nach einem der vorhergehenden Ansprüche zum Messen von Drehmomenten in Robotergelenken.

13. Drehmomentsensor nach einem der Ansprüche 1 bis 11 zur Verwendung in rotatorischen drehmomentgeregelten Antrieben oder Servoantrieben.

## Claims

1. A torque sensor in the form of a monolithic disk-shaped mount (1) comprising a toroidal inner flange (10) having first force input locations (12), a toroidal outer flange (11) having second force input locations (13) and connecting webs (14) oriented radially between said two flanges (10, 11) each featuring a mechanically weakened portion at which sensors (6) generating electrical output signals as a function of compressive stress or strain, circuited on the principle of a Wheatstone bridge in quarter, half or full bridges such that a torque can be sensed, **characterized in that** said mount (1) comprises a contiguous multi-section flat upper face, and said mechanically weakened portions of said connecting webs (14) are configured as underside recesses (15) each with a thin diaphragm-type closure (15a), sensors (6) being mounted on said flat upper face of said diaphragm-type closures (15a).

2. The torque sensor as set forth in claim 1, **characterized in that** said mechanically weakened portions of said connecting webs (14) have a substantially U-shaped cross-section.

3. The torque sensor as set forth in claim 1 or 2, **characterized in that** the transition from the under face of said diaphragm-type closure (15a) of each recesses (15) to said under face of each roughly perpendicular oriented wall portions (15c) is configured as a circumferential rounding (notch) 15b

4. The torque sensor as set forth in claim 3, **characterized in that** said roughly radially oriented, web-shaped side wall portions (15c) of said connecting webs (14) comprise differing wall thicknesses and thus portions which are elastic and reduced elastic, i.e. stiffer.

5. The torque sensor as set forth in claim 4, **characterized in that** said elastic portions corresponding to wall portions of reduced wall thickness are provided in the transitions from said radially oriented sections to the sections of said wall portions (15c) oriented along said flanges (10, 11) and wall portions (15c) and wall portions of greater wall thickness corresponding to portions of reduced elasticity and thus stiffer being located in-between.

6. The torque sensor as set forth in any of the preceding claims, **characterized in that** said radially outer faces of said connecting webs (14) oriented perpendicular to the face of said mount (1) are configured as flat faces on which sensors (6₁) are mounted.

7. The torque sensor as set forth in any of the preceding claims, **characterized in that** lugs (17a) for mounting parts supporting the electronics are configured inswept from said outer flange (11) in recesses (16) between two connecting webs (14)

8. A torque sensor in the form of a monolithic disk-shaped mount (2) comprising a toroidal inner flange (20) having first force input locations (22), a toroidal outer flange (21) having second force input locations (23) and connecting webs (24) oriented radially between said two flanges (20, 21), said connecting webs each featuring mechanically weakened sections configured as recesses (25, 25') extending full-length from the upper to the lower side of said connecting webs (24, 24'), wherein at least one outer face (24a, 24a') of the latter oriented perpendicular to the surface of said mount (2) is configured as a flat face mounting sensors (6₁) generating electrical output signals as a function of compressive stress or strain, circuited on the principle of a Wheatstone bridge in quarter, half or full bridges such that a torque can be sensed, wherein roughly radially oriented side wall portions (25c, 25'c) of said recesses (25, 25') comprise a variable cross-section and said two radially oriented outer faces (24a, 24'a) of said connecting webs (24, 24') comprise roughly planoparallel faces, resulting in two sensing spokes on which corresponding oriented sensors (6₁) are mounted.

9. The torque sensor as set forth in claim 8, wherein said mount (2) additionally comprises stops corresponding in number to that of said connecting webs (24) in the form of radially oriented beams (28) extending each from the inner or outer flange (20, 21) into slots (21a) in said outer or inner flange (21, 20), a narrow gap (29) being configured between the free ends of said beams (28) and said slots in said outer or inner flange (21, 20) and that correspondingly oriented sensors (6₂) are mounted on flat outer face portions (28a) oriented perpendicular to the upper side of said beams (28).

10. The torque sensor as set forth in claim 9, wherein inserted between said connecting webs (24) in stops (27) configured at said inner or outer flange (20, 21) are radially oriented locating pins (7) which protrude fitted into holes (8) drilled in said outer or inner flange (21, 20).

11. The torque sensor as set forth in claim 9, wherein configured between said connecting webs (24), radially protruding from said inner or outer flange (20, 21) and partly overlapping are stops and inserted in each one of said partly overlapping stops are axially oriented locating pins protruding fitted in holes drilled in the other stop in each case.

12. The torque sensor as set forth in any of the preceding claims for sensing torques in robotic articulated joints.

13. The torque sensor as set forth in any of the claims 1 to 11 for use in rotationally torque-controlled drives or servo drives.

## Revendications

1. Capteur de couple sous la forme d'une pièce de réception monolithique (1) en forme de disque, constitué :
- d'une bride intérieure (10) en forme d'anneau circulaire comportant des premiers points d'introduction de forces (12) ;
- d'une bride extérieure (11) en forme d'anneau circulaire comportant des seconds points d'introduction de forces (13) ; et
- de barrettes de liaison (14) réalisées entre les deux brides (10, 11) et s'étendant radialement, comportant respectivement un tronçon affaibli mécaniquement sur lequel sont prévus des capteurs de valeurs de mesure (6) sensibles à la pression ou à l'extension et générant des signaux de sortie électriques, et qui sont branchés respectivement selon le principe d'un pont de Wheatstone pour former des quarts de pont, des demi-ponts ou des ponts intégraux, d'une manière telle qu'il est possible de déterminer un couple,
**caractérisé en ce que** :
- la pièce de réception (1) présente une face supérieure cohérente, subdivisée et plane ;
- les tronçons affaiblis mécaniquement des barrettes de liaison (14) sont réalisés comme évidements (15) sur la face inférieure, comportant respectivement une terminaison mince (15a) faisant membrane, des capteurs de valeurs de mesure (6) étant placés sur la face supérieure plate et plane des terminaison (15a) faisant membrane.

2. Capteur de couple selon la revendication 1, **caractérisé en ce que** les tronçons affaiblis mécaniquement des barrettes de liaison (14) ont une section transversale sensiblement en forme de U.

3. Capteur de couple selon la revendication 1 ou 2, **caractérisé en ce que** la transition de la face inférieure plate de la terminaison (15a) faisant membrane de chaque évidement (15) dans des zones de paroi (15c) orientées approximativement perpendiculairement à la face inférieure plate est réalisée comme un arrondissement circonférentiel (15b) (gorge).

4. Capteur de couple selon la revendication 3, **caractérisé en ce que** les zones de paroi latérales (15c) des barrettes de liaison (14), en forme de barrette et s'étendant approximativement en direction radiale, présentent des épaisseurs de paroi différentes et ainsi des zones plus rigides, élastiques et moins élastiques.

5. Capteur de couple selon la revendication 4, **caractérisé en ce que** les zones de paroi comportant une épaisseur de paroi plus petite des zones correspondantes élastiques se trouvent dans les transitions des tronçons s'étendant en direction radiale vers les tronçons des zones de paroi (15c), s'étendant le long des brides (10, 11), et **en ce qu'**entre eux sont disposées les zones de paroi comportant une épaisseur de paroi plus grande des zones correspondantes moins élastiques et ainsi plus rigides.

6. Capteur de couple selon l'une des revendications précédentes, **caractérisé en ce que** les surfaces extérieures des barrettes de liaison (14), orientées perpendiculairement à la surface de la pièce de réception (1) et s'étendant en direction radiale, sont réalisées comme surfaces planes sur lesquelles sont montées des capteurs de valeurs de mesure (6₁).

7. Capteur de couple selon l'une des revendications précédentes, **caractérisé en ce que** des parties portantes sont réalisées dans des parties découpées (16) entre deux barrettes de liaison (14), depuis la bride extérieure (11) vers des appendices (17a) faisant saillie vers l'intérieur, pour la mise en place de l'électronique.

8. Capteur de couple sous la forme d'une pièce de réception monolithique (2) en forme de disque, constitué :
- d'une bride intérieure (20) en forme d'anneau circulaire comportant des premiers points d'introduction de forces (22) ;
- d'une bride extérieure (21) en forme d'anneau circulaire comportant des seconds points d'introduction de forces (23) ; et
- de barrettes de liaison (24) réalisées entre les deux brides (20, 21) et s'étendant radialement, comportant respectivement des tronçons affaiblis mécaniquement qui sont réalisés comme parties découpées continues (25, 25') depuis la face supérieure vers la face inférieure des barrettes de liaison (24, 24'), sachant qu'au moins une des surfaces extérieures (24a, 24'a) des barrettes de liaison (24, 24'), orientées perpendiculairement à la surface de la pièce de réception (2) et s'étendant en direction radiale, est réalisée comme surface plane sur laquelle sont prévus des capteurs de valeurs de mesure (6₁) sensibles à la pression ou à l'extension et générant des signaux de sortie électriques, et qui sont branchés respectivement selon le principe d'un pont de Wheatstone pour former des quarts de pont, des demi-ponts ou des ponts intégraux, d'une manière telle qu'il est possible de déterminer un couple,
dans lequel :
- des zones de paroi latérales (25c, 25'c) des parties découpées (25, 25'), orientées approximativement radialement, présentent une section transversale variable ; et
- les deux surfaces extérieures (24a, 24'a) des barrettes de liaison (24, 24'), s'étendant en direction radiale, présentent des surfaces approximativement parallèles au plan,
à la suite de quoi deux rayons de mesure sont formés, sur lesquels sont montés des capteurs de valeurs de mesure (6₁) orientés de manière correspondante.

9. Capteur de couple selon la revendication 8, dans lequel :
- la pièce de réception (2) présente en supplément un certain nombre de butées qui correspond au nombre de barrettes de liaison (24), sous la forme de traverses (28) partant respectivement de la bride intérieure ou extérieure (20, 21) et arrivant jusque dans des creux (21a) dans la bride intérieure ou extérieure (20, 21), et s'étendant radialement, sachant qu'une fente étroite (29) est réalisée entre les extrémités libres des traverses (28) et les creux (21a) dans la bride intérieure ou extérieure (20, 21) ; et
- des capteurs de valeurs de mesure (6₂) orientés respectivement de manière correspondante sont montés sur les zones de surface extérieure planes (28a) des traverses (28), s'étendant perpendiculairement à la face supérieure des traverses.

10. Capteur de couple selon la revendication 9, dans lequel des goupilles cylindriques (7) s'étendant radialement sont mises en place entre les barrettes de liaison (24) dans des appendices (27) réalisés sur la bride intérieure ou extérieure (20, 21), goupilles qui font saillie avec un ajustement avec jeu dans des perçages (8) dans la bride extérieure ou intérieure (21, 20).

11. Capteur de couple selon la revendication 9, dans lequel des appendices faisant saillie en direction radiale et se recouvrant partiellement sont réalisés entre les barrettes de liaison (24) de la bride intérieure ou extérieure (20, 21), et des goupilles cylindriques s'étendant en direction axiale sont mises en place respectivement dans un des appendices se recouvrant partiellement, goupilles qui font saillie avec un ajustement avec jeu dans des perçages respectivement dans l'autre appendice.

12. Capteur de couple selon l'une des revendications précédentes pour mesurer des couples dans des articulations de robot.

13. Capteur de couple selon l'une des revendications 1 à 11 pour l'utilisation dans des entraînements ou des servocommandes rotatoires régulées en couple.
